# EUROPEAN PATENT SPECIFICATION

(11) **EP 1 045 231 B1**
(45) Date of publication and mention of the grant of the patent: **26.03.2003**
(21) Application number: 00108277.5
(22) Date of filing: 14.04.2000
(51) Int. Cl.: G01J 3/52

(54) **Device and method for determining compatible colors**
Verfahren und Vorrichtung zum Bestimmen von kompatiblen Farben
Procédé et dispositif pour la détermination de couleurs compatibles

(30) Priority: 15.04.1999 JP 10858799
(43) Date of publication of application: 18.10.2000
(73) Proprietor: Sofics Co., Ashiya, Hyogo 659-0091 (JP)
(72) Inventor: Tarumoto, Masahiro, Ashiya, HYOGO 659-0091 (JP)
(74) Representative: Hiltl, Elmar, Dr.

(56) References cited:
- FR-A- 2 546 624
- GB-A- 475 280
- GB-A- 1 282 112
- PATENT ABSTRACTS OF JAPAN vol. 96, no. 12, 26 December 1996 (1996-12-26) & JP 08 219887 A (COLOR SPACE WAMU), 30 August 1996 (1996-08-30)

## Description

### BACKGROUND OF THE INVENTION

This invention relates to a device and method for determining compatible colors in accordance with harmonious color combinations appearing in nature.

Various methods and devices have been suggested in the prior art for determining harmonious color combinations.

Some such devices involve determining proper color combinations based on the solar spectrum associated with the chromatic musical scale. See, for example, U.S. Patent Numbers 1,308,512, 1,467,032, and 1,564,743.

Other devices have been proposed for use in selecting compatible colors for cosmetic purposes. See, for example, U.S. Patent Numbers 4,561,850 and 5,311,293.

Japanese Patent No. 1859699 issued to the present inventor on July 27, 1994, describes a color matrix chart divided into four zones by an x and y axis with a first zone containing yellow and harmonious colors, the second zone containing red and harmonious colors, the third zone containing green and harmonious colors, and the fourth zone containing blue and harmonious colors. A fifth zone, called the central zone, is located at the juncture of the x and y axes, and contains colors which are in harmony with the colors in all four of the other zones. The yellow and red zones contain colors which stimulate excitement and the green and blue zones contain colors which are sedative. The colors are selected in accordance with what appears to the human eye to be visually harmonious.

All such schemes for selecting harmonious colors are based on human input, and do not provide color combinations pleasing to everyone.

It has been observed that color combinations found in nature, such as in flowers and other plants, are always pleasing to the human eye, and are therefore superior to man-made color harmony systems.

It is an object of this invention to provide a device for capturing nature's harmonious color combinations to thereby make it easier and more reliable to select color combinations in accordance with natural color selection.

### SUMMARY OF THE INVENTION

The invention is a set of color gages used for selecting, or teaching how to select, harmonious colors in accordance with those found in nature.

It has been found that in nature there are eight basic colors found in plants, the colors being red, pink, yellow, green, purple, white, brown, or blue. It has also been found that the different colors and different shades or hues of each such color may be placed into one of three groups called Aero, Solis, or Aqua, based upon the appearance of such colors together in nature.

The gages contain a plurality of colored segments, the segments representing the Aero, Solis, and Aqua versions of each color, with the exception of Aqua brown and Solis blue which are not found in nature.

Preferably the gages are circular, and preferably each gage contains segments representing the Aero, Aqua and/or Solis versions of two colors.

### BRIEF DESCRIPTION OF THE DRAWINGS

FIG. 1 is a front view of the red/pink color gage of the invention;
FIG. 2 is a front view of the yellow/green color gage of the invention;
FIG. 3 is a front view of the purple/white gage of the invention; and
FIG. 4 is a front view of the brown/blue gage of the invention.
FIG.5 shows the distribution of hues of color of green leaves.
FIGs 6 to 9 show color distributions of red flowers.
FIG.10 shows a color scheme in flower.

### DESCRIPTION OF PREFERRED EMBODIMENTS

Plants contain a variety of harmonious colors. To a human observer, such color combinations always appear harmonious.

A flower, for example, has a variety of colors on its petals, stamen, pistil, sepal, stalk, and leaves, all of which are harmonious with one another. It has been found by the present inventor that an average of fifty colors can be found in each flower. The present inventor has examined over ten thousand kinds of flowers, whose colors were analyzed and classified. From all these observations and analyses, the inventor has found that the colors contained in every flower follows certain general rules which can be used to create a set of color gages for use in selecting naturally harmonious color combinations.

It has been found that all the colors found in the plants investigated can be divided into three groups. The inventor calls these three groups "Aero", "Soils", and "Aqua", named after "air", "sun", and "water", respectively. There are red/pink colors in all three groups; there are yellow/green colors in all three groups; and there are purple/white colors in all three groups. However, it has been determined that there is no Aqua brown and no Solis blue.

It has been found that nature uses combinations of all colors within each one of these three groups, i.e., such combinations are naturally harmonious and compatible.

It has also been found that nature uses combinations of Aero colors with either Solis or Aqua colors.

However, it has been found that Solis and Aqua colors are incompatible in nature; fewer than three percent of the ten thousand plants examined had such combinations.

The tropical water lily is exemplary of plants that are composed of all Aero colors.

The hibiscus plant is exemplary of plants that are composed of all Solis colors.

The bougainvillea plant is exemplary of plants that are composed of all Aqua colors.

The pivotal color in nature is the green color of the leaf of plant. The green hue of leaves of plant is distributed between the version of yellow green hue and blue hue. In this invention, it is found that the distribution of the green hue of plant leaves is predominantly in particular part of range in the green hue zone. The name, Green of Aero Color (hereinafter called Aero Green), signifies the green hue range in which distribution of green color for plant leaves predominate. The hue of green color of leaf for over 50% kinds of plants are within the range of Aero Green as illustrated in Chart No.1. For examples, the green colors of leaves of pine tree, cherry tree, plum tree, dandelion, rice plant, and camellia are all in the Aero Green zone.

Because humans have seen green in Aero Green zone frequently throughout human history, we have become familiar with such greens in Aero Green zone most.

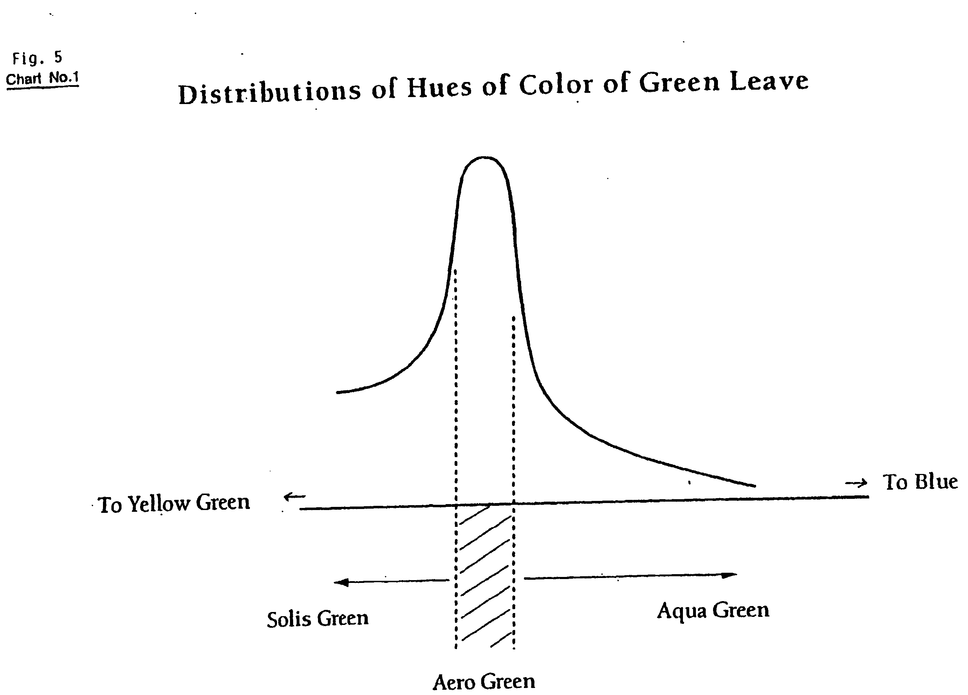

All the green hue between Aero Green zone and yellow green hue area is called Solis Green, as illustrated in Fig.5.

The relationship between Aero Green and Solis Green is illustrated in Fig.5, also. Horizontal axis shows the extent of green hue between yellow green and blue and vertical axis shows the frequency of numbers of green hue of leaves in botany. As mentioned above, Chart No.1 shows that the distribution of the green hue of leaves is predominantly in Aero Green zone. Fig.5 also shows that all the green hue colors between Aero Green zone and yellow green hue area are called Solis Green.

Green of Aqua color (hereinafter called Aqua Green) is the color that comes under the range between Aero Green zone and blue area, as illustrated in Fig.5. Since the leaf became flower by changing its color and form, research was made on the relationship between the color of flower and the green of leaf.

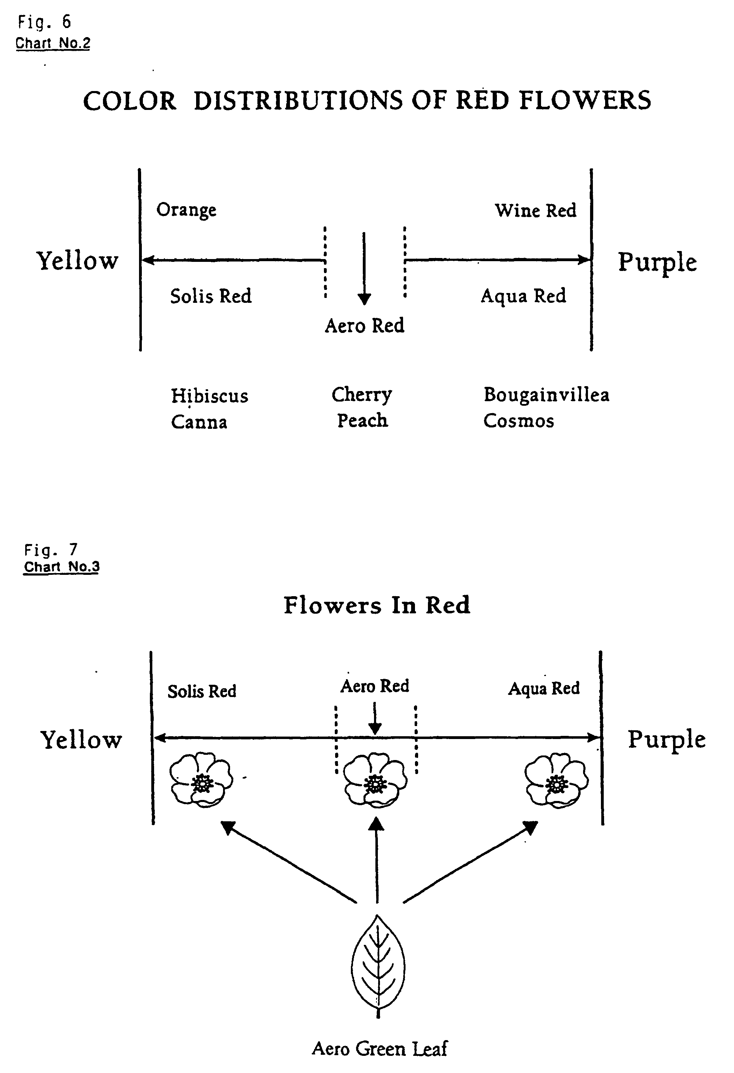

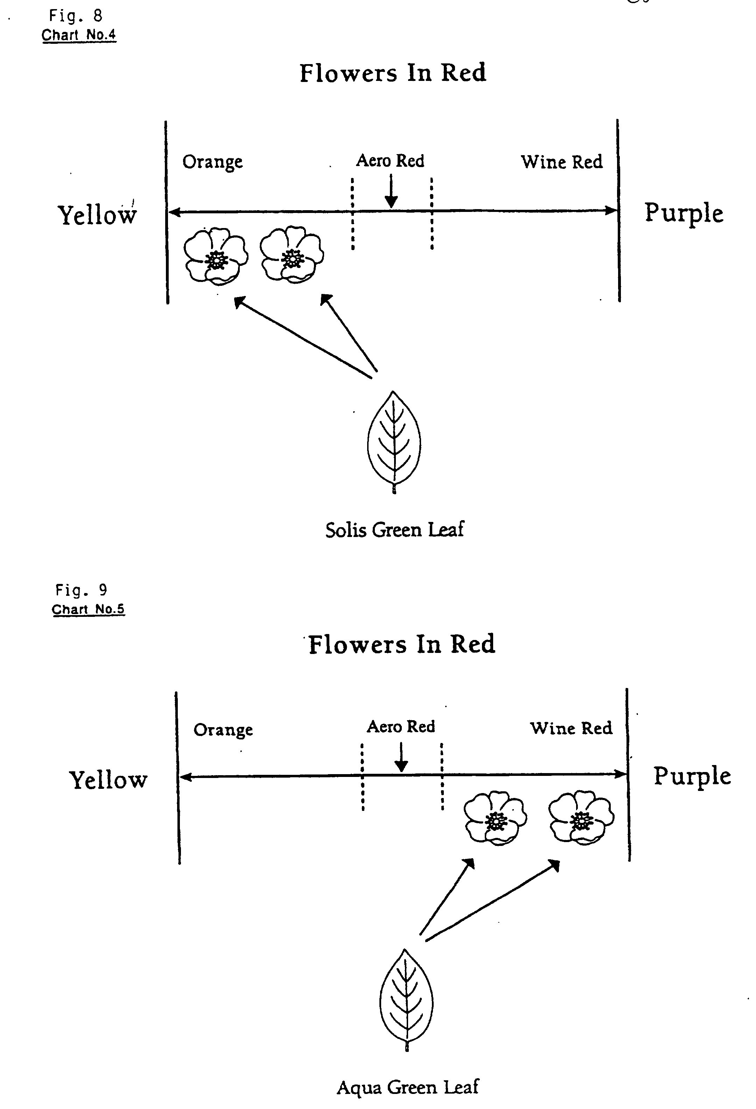

In terms of red, flowers of hibiscus and canna belong to Solis red; flowers of cherry and peach belong to Aero red; and flowers of bougenvillea and cosmos belong to Aqua red. It is found that the red hue on each flower is derived from the green hue of leaf according to several rules. For example, Aero Red comes out on flower of which leaf is Aero Green. It is, therefore, defined that Aero Red comes out on flower from Aero Green leaf and does not come out on flower with Solis or Aqua Green leaf excluding very few exceptions, as illustrated in figures 6 to 9.

In other word, Aero Red usually comes out on flower of which leaf is Aero Green. Aqua Red comes under the range between Aero Red and Purple.

In terms of yellow, Aero Yellow comes out from the leaf of which color is Aero Yellow and it does not come out either from Solis or Aqua Green leaf. Solis Yellow is the group of color that comes under the range between orange color area and Aero Yellow zone. Aqua yellow is the group of color that comes under the range between Aero Yellow zone and Yellow Green area.

In terms of Yellow Green, Aero Yellow Green is the group of color that comes under the particular hue zone where over 50% of yellow green leaf is predominant. Aero Yellow Green is the color that comes out from Aero Green leaf and it does not come out from either Solis or Aqua Green leaf.

Solis Yellow Green is the group of color that comes under the range between Aero Yellow Green zone and yellow area. Aqua Yellow Green is the group of color that comes under the range between Aero Green zone and green area. Pink color is the light shade of Red. Therefore, light shade of Aero Red, Solis Red and Aqua Red are equal to Aero Pink, Solis Pink and Aqua Pink respectively.

In terms of purple, as a general rule, Aero Purple is the group of color that comes out from Aero Green leaf only and it does not come out from either Solis or Aqua Green leaf. Solis Purple is the group of color that comes under the range between Aero Red zone and red area. Aqua Purple is the group of color that comes under the range between Aero Purple zone and blue area.

In terms of white, Aero White is the group of color that comes out from Aero Green leaf only and it does not come out from either Solis or Aqua Green leaf. Solis White is the group of whitish color that comes out from Solis Green leaf. Aqua Green is the group of whitish color that comes out from Aqua Green leaf. Same formula can be applied on gray and black color, too. In other words, Aero, Solis and Aqua Gray or Black are equally defined as same as white color.

In terms of blue, Aero Blue is the group of color that comes out from Aero or Solis Green leaf. Aqua Blue is the group of color that comes under the range between Aero Blue zone and purple area. Solis Blue does not exist in botany.

In terms of brown, Aero Brown is the group of color that comes out from Aero or Aqua Green leaf. Solis Brown is the group of color that comes out from Aero or Aqua Green leaf. Aqua Brown does not exist in botany.

In this invention, the method to determining compatible colors in accordance with harmonious color combination appearing in nature is summarized in the five principals as described in hereunder:
1. The color mix which is composed with Aero Colors
2. The color mix which is composed with Solis Colors
3. The color mix which is composed with Aqua Colors
4. The color mix which is composed with Aero and Solis Colors
5. The color mix which is composed with Aero and Aqua Colors

The color scheme appeared in each plant in nature is formulated based on the above five principles. All such color combination found in nature are always pleasing to the human eye because humans have been watching such color scheme pattern in nature for five million years. If a man-made color scheme is against the above-mentioned five principles, it will be perceived as unnatural and not harmonized color mix by majority of people.

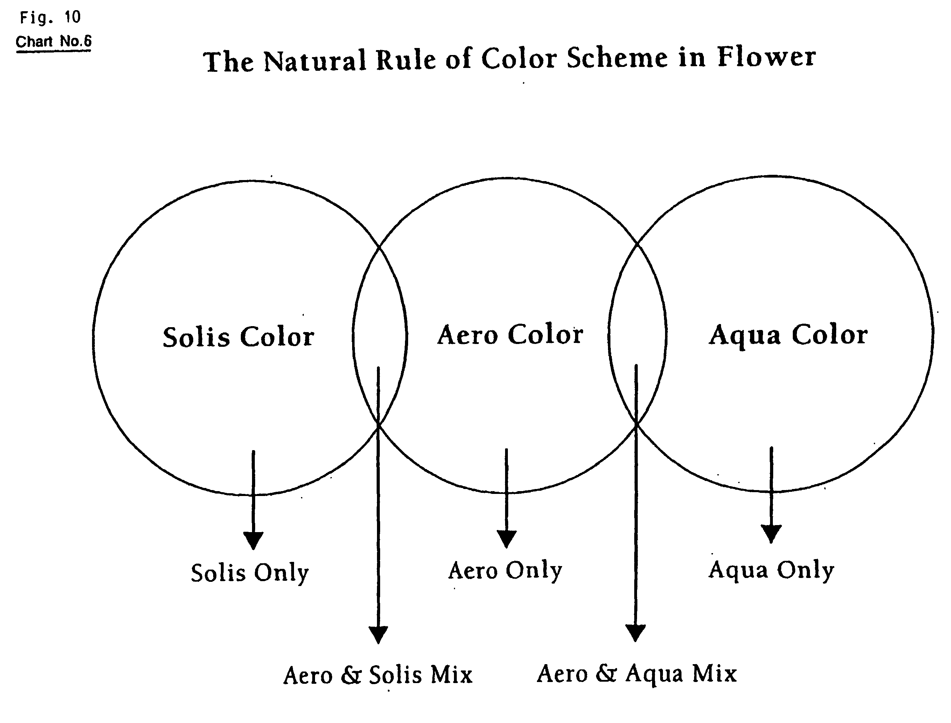

In this invention, if a designer makes color scheme based on the following color mix patterns, he can get the naturally harmonized color mix automatically, as illustrated in Fig. 10.
a) Color mix by Aero Colors only
b) Color mix by Solis Colors only,
c) Color mix by Aqua Colors only
d) Color mix by Aero and Solis Colors
e) Color mix by Aero and Aqua Colors

In other words, the color scheme rule in nature can be said as follows:
1. Aero Color can be combined with any colors
2. Color combination with Solis and Aqua Color should be avoided
3. Solis Color can be combined with either Solis or Aero Color
4. Aqua Color can be combined with either Aqua or Aero Color

The color gages of this invention enables the user to create harmonious color combinations in accordance with those found in nature, which are inherently pleasing to the human eye. The color gages of this invention can also be used as a teaching device to illustrate such harmonious color combinations.

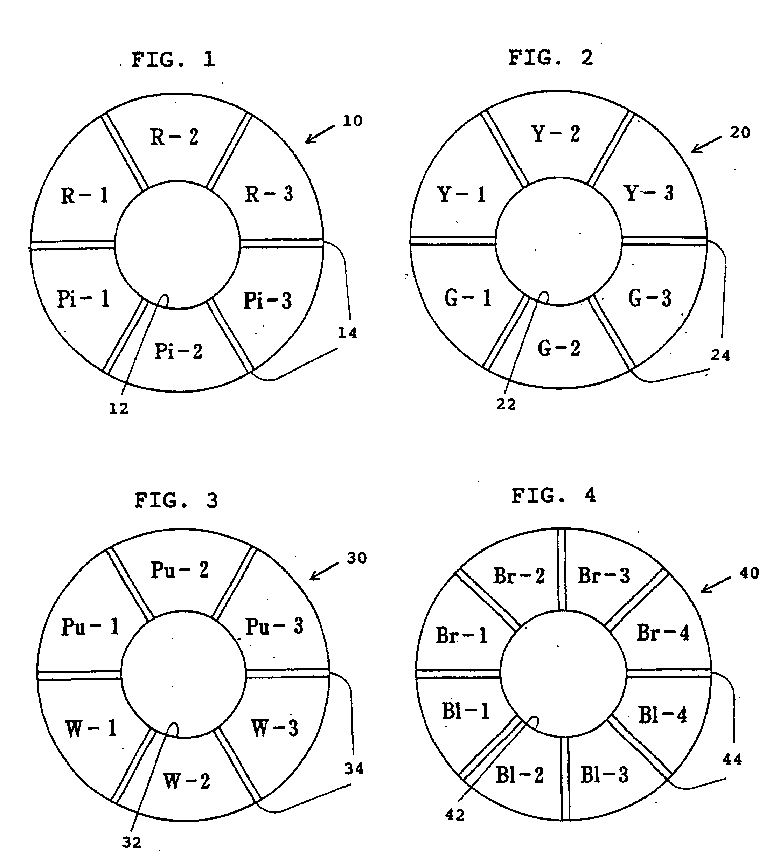

FIG. 1 illustrates the red/pink color gage 10 of this invention. Color gage 10 is divided into six segments, denoted in the drawing by reference numerals R-1, R-2, R-3, Pi-1, Pi-2, and Pi-3. Segment R-1 is colored Solis red, segment R-2 is colored Aero red, segment R-3 is colored Aqua red, segment Pi-1 is colored Solis pink, segment Pi-2 is colored Aero pink, and segment Pi-3 is colored Aqua pink.

FIG. 2 illustrates the yellow/green gage 20 of this invention. Color gage 20 is divided into six segments, Y-1, Y-2, Y-3, G-1, G-2, andG-3. Segment Y-1 is colored Solisyellow, segment Y-2 is colored Aero yellow, segment Y-3 is colored Aqua yellow, segment G-1 is colored Solis green, segment G-2 is colored Aero green, and segment G-3 is colored Aqua green.

FIG. 3 illustrates the purple/white gage 30 of this invention. Color gage 30 is divided into six segments, Pu-1, Pu-2, Pu-3, W-1, W-2, and W-3. Segment Pu-1 is colored Solis purple, segment Pu-2 is colored Aero purple, segment Pu-3 is colored Aqua purple, segment W-1 is colored Solis white, segment W-2 is colored Aero white, and segment W-3 is colored Aqua white.

FIG. 4 illustrates the brown/blue gage of this invention. Color gage 40 is divided into eight segments, Br-1, Br-2, Br-3, Br-4, Bl-1, Bl-2, Bl-3, and Bl-4. Segments Br-1 and Br-2 are colored Solis browns, segments Br-3 and Br-4 are colored Aero browns, segments Bl-1 and Bl-2 are colored Aero blues, and segments Bl-3 and Bl-4 are colored Aqua blues. As mentioned above, there are no Aqua browns and no Solis blues in nature; therefore, none appear on the brown/blue gage of this invention. Particularly, Br-1 is Solis brown in light shade and Br-2 is Solis brown in dark shade; and Br-3 is Aero brown in dark shade and Br-4 is Aero brown in light shade. Also particularly Bl-1 is Aero blue in dark shade and Bl-2 is Aero blue in light shade; and Bl-3 is Aqua blue in light shade and Bl-4 is Aqua blue in dark shade.

The above colors can be translated into JIS (Japan Industrial Standard) Color Standard Number which is formulated by Munsell Color System.
R-1: 5R 4/14
R-2: 10RP 4/14
R-3: 5RP 4/12
Pi-1: 5R 7/8
Pi-2: 10RP 7/8
Pi-3: 5RP 7/8
Y-1: 10YR 8/10
Y-2: 2.5Y 8/10
Y-3: 7.5Y 8/10
G-1: 2.5GY 4/6
G-2: 7.5GY 4/6
G-3: 2.5G 4/6
Pu-1: 10P 4/6
Pu-2: 7.5P 4/8
Pu-3: 5P 4/8
W-1: 7.5YR 9/1
W-2: 2.5Y 9/1
W-3: 7.5B 9/1
Br-1 2.5YR 6/6
Br-2: 2.5YR 3/4
Br-3: 10RP 3/4
Br-4: 10RP 6/4
Bl-1: 2.5PB 4/8
Bl-2: 2.5PB 6/6
Bl-3: 5PB 6/8
Bl-4: 7.5PB 3/10

In a preferred embodiment, color gages 10, 20, 30, and 40 are circular, the gages having circular openings 12, 22, 32, and 42 located centrally therein, respectively, as shown. The various colored segments extend from the periphery of each circular opening 12, 22, 32, or 42 to the periphery of the respective gage 10, 20, 30, or 40. Each segment contained on gages 10, 20, 30, and 40 is separated from each adjacent segment by narrow white lanes 14, 24, 34. and 44, respectively.

In use, a designer wishing to select compatible colors for any purpose, such as interior decoration, industrial designs, etc., would select a dominant color with which other colors are to be used, it being desired to select such other colors to be in harmonious relationship with the dominant color with each other in accordance with the color mix based upon the five principles in nature described herein. To accomplish this object, the designer would select the appropriate color gage of this invention to closely match the selected dominant color with one of the color segments. For example, if the dominant color selected by the designer is a red color, the designer would take red/pink gage. And then, he put the gage on the dominant red color to be able to see the red color from the center hole of the gage and see which of the red, R-1, R-2 or R-3 more closely approximates the red color he has selected. Once such a match is made, the designer can quickly determine if the red he has selected is, an Aero red, a Solis red or an Aqua red. If the dominant red color is closest in hue to the Aero Red i.e. R-2, it is determined as Aero Red color.

In this case, the dominant red color is compatible with any green colors, i.e., Aero Green, Solis Green and Aqua Green colors based upon the five principles described herein. If the dominant red is determined as Solis Red, the green color can be selected from Solis or Aero Green Color group to be compatible with the red. He should not use the combination of Solis Red and Aqua Green color. If the dominant red is determined as Aqua Red, he should select greens from either Aqua Green or Aero Green group.

Except Brown and Blue, he can determine the compatible color under the same methods according to the five principles. In terms of brown and blue, there is no Aqua Color in brown color and there is not Solis Color in blue color. If the selected dominant color is brown or blue in Aero Color, the Aero Brown and Aero Blue can be combined with any colors. But, if the blue is determined as Aqua Color, the blue should not be combined with any Solis Colors. Also, if the dominant color brown is determined as Solis Color, it should not be combined with any Aqua Color.

The color gages 10, 20, 30 and 40 do not contain all the various shades of the various Solis, Aero, and Aqua colors. A chart for each of Solis colors, Aero colors, and Aqua colors are prepared, each chart containing various shades of each color, ranging from light to dark. In a preferred embodiment, each chart contains five shades of each color, white being represented by a single shade.

The shades selected for the color gages of the invention, except for the brown/blue gage, represent a "middle" shade for that color, i.e., a shade between the light and dark shades for that color. The brown/blue gage has no Aqua brown and no Solis blue, so a light brown and light blue shade for each of the Solis and Aero colors are added to that gage.

### Descriptions of Natural Color Gauge, according to Fig. 1 to 4

| RED/PINK Gauge | | |
|---|---|---|
| R- 1: Red-soils | R- 2: Red-aero | R- 3: Red-aqua |
| Pi-1: Pink-solis | Pi-1: Pink-aero | Pi-3: Pink-aqua |

| YELLOW/GREEN Gauge | | |
|---|---|---|
| Y-1: Yellow-solis | Y-2: Yellow-aero | Y-3: Yellow-aqua |
| G-1: Green-solis | G-2: Green-aero | G-3: Green-aqua |

| PURPLE/WHITE Gauge | | |
|---|---|---|
| Pu-1: Purple-solis | Pu-2: Purple-aero | Pu-3: Purple-aqua |
| W- 1: White-solis | W- 2: White-aero | W- 3: White-aqua |

| BROWN/BLUE Gauge | | |
|---|---|---|
| Br-1: Brown-solis in light shade | Br-2: Brown-solis in dark shade | Br-3: Brown-aero in dark shade |
| Bl-1: Blue-aero in dark shade | Bl-2: Blue-aero in light shade | Bl-3: Blue-aqua in light shade |
| Br-4: Brown aero in light shade | | |
| Bl-4: Blue-aqua in dark shade | | |

## Claims

1. A set of color gages for use in selecting compatible color combinations in accordance with harmonious color combinations found in nature comprising:
a red/pink gage having three red colored segments and three pink colored segments,
said three red colored segments being comprised of one Solis red colored segment, one Aero red colored segment, and one Aqua red colored segment, and said three pink colored segments being comprised of one Solis pink colored segment, one Aero pink colored segment, and one Aqua pink colored segment;
a yellow/green gage having three yellow colored segments and three green colored segments,
said three yellow colored segments being comprised of one Solis yellow colored segment, one Aero yellow colored segment, and one Aqua yellow colored segment, and
said three green colored segments being comprised of one Solis green colored segment, one Aero green colored segment, and one Aqua green colored segment;
a purple/white gage having three purple colored segments and three white colored segments,
said three purple colored segments being comprised of one Solis purple colored segment, one Aero purple colored segment, and one Aqua purple colored segment, and
said three white colored segments being comprised of one Solis white colored segment, one Aero white colored segment, and one Aqua white colored segment; and
a brown/blue gage having four brown colored segments and four blue colored segments,
said four brown colored segments being comprised of two Solis brown colored segments and two Aero brown colored segments, and
said four blue colored segments being comprised of two Aero blue colored segments and two Aqua blue colored segments.

2. The set of color gages of claim 1 wherein each of said gages is circular.

3. The set of color gages of claim 2 wherein each of said circular gages has a concentric circular opening in the center of said circular gage, the colored segments of each of said circular gages extending from the periphery of said opening to the periphery of said circular gage.

4. The set of color gages of claim 1 wherein each of said segments is separated from adjacent segments by a space.

5. The set of color gages of claim 1 wherein the Solis, Aero, and Aqua colors of the red/pink, yellow/green, and purple/white gages are selected from a shade substantially midway between the light and dark shades of those colors.

6. The set of color gages of claims 1 wherein in the brown/blue color gage one of each of the two Solis brown and blue shades and one each of the two Aero brown and blue shades are selected from a light shade of that color, the other Solis brown and blue shades and the other Aero brown and blue shades being selected from a shade substantially midway between the light and dark shades of those colors.

7. A compatible color selection package comprising:
the set of the color gages of claim 1;
a Solis chart containing a plurality of shades of each of the Solis colors;
an Aero chart containing a plurality of shades of each of the Aero colors; and
an Aqua chart containing a plurality of shades of each of the Aqua colors.

8. A process of selecting harmonious color combinations comprising:
determining colors appearing together in a plurality of different kinds of plants;
classifying said colors into three color groups, each color group containing colors found together in individual plants;
preparing a set of color gages, each color gage containing at least one representative color of each of said three color groups;
comparing said color gages with a selected first color with which it is desired to associate at least one other color harmonious therewith, and determining to which of said three color groups said selected first color belongs; and
selecting said other color from the same color group as said selected first color.

## Patentansprüche

1. Satz aus Farbbestimmungsgeräten zur Verwendung beim Auswählen von miteinander verträglichen Farbkombinationen entsprechend harmonischer Farbkombinationen, die in der Natur gefunden werden, mit
einem Farbbestimmungsgerät rot/rosa, das drei rot gefärbte Segmente und drei rosa gefärbte Segmente aufweist, wobei die drei rot gefärbten Segmente aus einem Solisrot gefärbten Segment, einem Aerorot gefärbten Segment und einem Aquarot gefärbten Segment sowie die drei rosa gefärbten Segmente aus einem Solisrosa gefärbten Segment, einem Aerorosa gefärbten Segment und einem Aquarosa gefärbten Segment bestehen,
einem Farbbestimmungsgerät gelb/grün mit drei gelb gefärbten Segmenten und drei grün gefärbten Segmenten, wobei die drei gelb gefärbten Segmente aus einem Solisgelb gefärbten Segment, einem Aerogelb gefärbten Segment und einem Aquagelb gefärbten Segment sowie die drei grün gefärbten Segmente aus einem Solisgrün gefärbten Segment, einem Aerogrün gefärbten Segment und einem Aquagrün gefärbten Segment bestehen,
einem Farbbestimmungsgerät purpur/weiß, das drei purpur gefärbte Segmente und drei weiß gefärbte Segmente aufweist, wobei die drei purpur gefärbten Segmente aus einem Solispurpur gefärbten Segment, einem Aeropurpur gefärbten Segment und einem Aquapurpur gefärbten Segment sowie die drei weiß gefärbten Segmente aus einem Solisweiß gefärbten Segment, einem Aeroweiß gefärbten Segment und einem Aquaweiß gefärbten Segment bestehen, und
einem Farbbestimmungsgerät braun/blau mit vier braun gefärbten Segmenten und vier blau gefärbten Segmenten, wobei die vier braun gefärbten Segmente aus zwei Solisbraun gefärbten Segmenten und zwei Aerobraun gefärbten Segmenten sowie die vier blau gefärbten Segmente aus zwei Aeroblau gefärbten Segmenten und zwei Aquablau gefärbten Segmenten bestehen.

2. Satz aus Farbbestimmungsgeräten nach Anspruch 1, worin jedes der Bestimmungsgeräte kreisförmig ist.

3. Satz aus Farbbestimmungsgeräten nach Anspruch 2, worin jedes der kreisförmigen Bestimmungsgeräte eine konzentrische kreisförmige Öffnung in der Mitte des kreisförmigen Bestimmungsgeräts aufweist, wobei sich die gefärbten Segmente jedes kreisförmigen Bestimmungsgeräts vom Außenumfang der genannten Öffnung bis zum Außenumfang des kreisförmigen Bestimmungsgeräts erstrecken.

4. Satz aus Farbbestimmungsgeräten nach Anspruch 1, worin jedes Segment von den benachbarten Segmenten durch einen Raum getrennt ist.

5. Satz aus Farbbestimmungsgeräten nach Anspruch 1, worin die Solis-, Aero- und Aqua-Farben der Bestimmungsgeräte rot/rosa, gelb/grün und purpur/weiß aus einem Farbton ausgewählt sind, der im wesentlichen in der Mitte zwischen dem hellen und dem dunklen Farbton dieser Farben liegt.

6. Satz aus Farbbestimmungsgeräten nach Anspruch 1, worin in dem Farbbestimmungsgerät braun/blau einer der zwei Farbtöne Solisbraun und Solisblau sowie jeweils einer der zwei Farbtöne Aerobraun und Aeroblau aus einem hellen Ton dieser Farbe und die anderen Farbtöne Solisbraun und Solisblau sowie die anderen Farbtöne Aerobraun und Aeroblau aus einem Farbton ausgewählt sind, der im wesentlichen in der Mitte zwischen dem hellen und dem dunklen Farbton dieser Farben liegt.

7. Zusammenstellung einer Auswahl von verträglichen Farben mit
dem Satz der Farbbestimmungsgeräte nach Anspruch 1,
einer Soliskarte, enthaltend eine Mehrzahl von Farbtönen jeder der Solisfarben,
einer Aerokarte, enthaltend eine Mehrzahl von Farbtönen jeder der Aerofarben, und
einer Aquakarte, enthaltend eine Mehrzahl von Farbtönen jeder der Aquafarben.

8. Verfahren zum Auswählen von harmonischen Farbkombinationen mit folgenden Schritten:
Bestimmen der Farben, die zusammen in einer Mehrzahl von verschiedenen Pflanzenarten vorkommen,
Klassifizieren der Farben in drei Farbgruppen, von denen jede Farben enthält, die zusammen in individuellen Pflanzen gefunden werden,
Herstellen eines Satzes aus Farbbestimmungsgeräten, von denen jedes mindestens eine repräsentative Farbe von jeder der drei Farbgruppen enthält,
Vergleichen der Farbbestimmungsgeräte mit einer ausgewählten ersten Farbe, die mindestens einer anderen Farbe harmonisch zugeordnet sein soll, und bestimmen, zu welcher der drei Färbgruppen die ausgewählte erste Farbe gehört, sowie
Auswählen der genannten anderen Farbe aus der gleichen Farbgruppe wie jener der ausgewählten ersten Farbe.

## Revendications

1. Ensemble d'étalons de couleur à utiliser pour sélectionner des combinaisons de couleurs compatibles conformément à des combinaisons de couleurs harmonieuses que l'on trouve dans la nature comprenant :
un étalon rouge/rose comportant trois segments colorés en rouge et trois segments colorés en rose,
lesdits trois segments colorés en rouge étant constitués d'un segment coloré en rouge Solis d'un segment coloré en rouge Aero, et d'un segment coloré en rouge Aqua, et lesdits trois segments colorés en rose étant constitués d'un segment coloré en rose Solis, d'un segment coloré en rose Aero et d'un segment coloré en rose Aqua,
un étalon jaune/vert comportant trois segments colorés en jaune et trois segments colorés en vert,
lesdits trois segments colorés en jaune étant constitués d'un segment coloré en jaune Solis, d'un segment coloré en jaune Aero et d'un segment coloré en jaune Aqua, et
lesdits trois segments colorés en vert étant constitués d'un segment coloré en vert Solis, d'un segment coloré en vert Aero, et d'un segment coloré en vert Aqua,
un étalon pourpre/blanc comportant trois segments colorés en pourpre et trois segments colorés en blanc,
lesdits trois segments colorés en pourpre étant constitués d'un segment coloré en pourpre Solis, d'un segment coloré en pourpre Aero, et d'un segment coloré en pourpre Aqua, et
lesdits trois segments colorés en blanc étant constitués d'un segment coloré en blanc Solis, d'un segment coloré en blanc Aero et d'un segment coloré en blanc Aqua, et
un étalon brun/bleu comportant quatre segments colorés en brun et quatre segments colorés en bleu,
lesdits quatre segments colorés en brun étant constitués de deux segments colorés en brun Solis et de deux segments colorés en brun Aero, et
lesdits quatre segments colorés en bleu étant constitués de deux segments colorés en bleu Aero et de deux segments colorés en bleu Aqua.

2. Ensemble d'étalons en couleur selon la revendication 1, dans lequel chacun desdits étalons est circulaire.

3. Ensemble d'étalons en couleur selon la revendication 2, dans lequel chacun desdits étalons circulaires présente une ouverture circulaire concentrique au centre dudit étalon circulaire, les segments colorés de chacun desdits étalons circulaires s'étendant de la périphérie de ladite ouverture à la périphérie dudit étalon circulaire.

4. Ensemble d'étalons en couleur selon la revendication 1, dans lequel chacun desdits segments est séparé des segments adjacents par un espace.

5. Ensemble d'étalons en couleur selon la revendication 1, dans lequel les couleurs Solis, Aero et Aqua des étalons rouge/rose, jaune/vert et pourpre/blanc sont sélectionnées à partir d'un ton sensiblement à mi-chemin entre les tons clairs et sombres de ces couleurs.

6. Ensemble d'étalons en couleur selon la revendication 1, dans lequel dans l'étalon en couleur brun/bleu l'un de chacun des deux tons brun et bleu Solis et l'un de chacun des deux tons brun et bleu Aero sont sélectionnés à partir d'un ton clair de cette couleur, les autres tons brun et bleu Solis et les autres tons brun et bleu Aero étant sélectionnés à partir d'un ton sensiblement à mi-chemin entre les tons clairs et sombres de ces couleurs.

7. Ensemble de sélections de couleurs compatibles comprenant :
l'ensemble des étalons en couleur selon la revendication 1,
un nuancier Solis contenant un certain nombre de tons de chacune des couleurs Solis,
un nuancier Aero contenant un certain nombre de tons de chacune des couleurs Aero, et
un nuancier Aqua contenant un certain nombre de tons de chacune des couleurs Aqua.

8. Traitement de sélection de combinaisons de couleurs harmonieuses comprenant :
la détermination de couleurs apparaissant ensemble dans une pluralité de types différents de plantes,
le classement desdites couleurs en trois groupes de couleurs, chaque groupe de couleurs contenant des couleurs que l'on trouve ensemble dans des plantes individuelles,
la préparation d'un ensemble d'étalons de couleurs, chaque étalon de couleurs contenant au moins une couleur représentative de chacun desdits trois groupes de couleurs,
la comparaison desdits étalons de couleurs à une première couleur sélectionnée avec laquelle on souhaite associer au moins une autre couleur qui est harmonieuse avec celle-ci, et la détermination du groupe auquel parmi lesdits trois groupes de couleurs, ladite première couleur sélectionnée appartient, et
la sélection de ladite autre couleur à partir du même groupe de couleurs en tant que dite première couleur sélectionnée.
